# EUROPEAN PATENT APPLICATION

(11) **EP 4 730 507 A1**
(43) Date of publication of application: **22.04.2026**
(21) Application number: 25206727.7
(22) Date of filing: 03.10.2025
(51) Int. Cl.: H01M 50/204, H01M 50/503, H01M 50/507

(54) **BATTERY STRUCTURE**

(30) Priority: 15.10.2024 KR 20240140437
(71) Applicant: SAMSUNG SDI CO., LTD., Yongin-si, Gyeonggi-do 17084 (KR)
(72) Inventor: LEE, Jonghyeok, 17084 YONGIN-SI (KR)
(74) Representative: Regimbeau

(57) **Abstract**

A battery structure includes battery cells arranged in a first direction and in which each battery cell includes an electrode terminal, a busbar holder (200) on a top of the battery cells and including a through hole (210), a busbar including a first flat surface and a second flat surface each electrically connected to one of the battery cells, fixing members (30) coupled to the busbar holder (200) in which each fixing member (30) is fixed between the first and second flat surfaces of the busbar, and separating members (40) coupled to the busbar holder and separating the busbars.

## Description

### TECHNICAL FIELD

The present disclosure relates to a battery structure, and more particularly, to a battery structure including a busbar holder capable of mounting various busbars.

### BACKGROUND

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

An electrode terminal of a secondary battery may be electrically connected to a busbar, and the busbar may be fixed by a busbar holder. The size and shape of busbar holder may vary according to the capacity and connection structure of a secondary battery.

With variations in the size and shape of a busbar holder, it may be necessary to manufacture bus holders differently, which complicates the assembly process and increases production cost.

The above information disclosed in this Background section is for the enhancement of understanding of the background of the present disclosure, and therefore, it may contain information that does not constitute related (or prior) art.

### SUMMARY

The present disclosure relates to a battery structure including a busbar holder capable of mounting various busbars.

These and other aspects and features of the present disclosure will be described in or will be apparent from the following description of embodiments of the present disclosure.

According to embodiments of the present disclosure, a battery structure includes a plurality of battery cells arranged in a first direction, each including an electrode terminal, a busbar holder on a top of the battery cells and including a through hole, a busbar including a first flat surface and a second flat surface electrically connected to the battery cells, a fixing member fixed between the first and second flat surfaces of the busbar and coupled to the busbar holder, and separating members coupled to the busbar holder and separating the busbars.

The busbar may include a bent portion between the first and second flat surfaces of the busbar. The fixing member may be fixed to the bent portion.

The busbar holder may include a fixing portion protruding upwardly from the busbar holder and extended along the through hole in the first direction, and the fixing portion may include an insertion groove into which the fixing member is configured to be inserted.

The fixing portion may be spaced apart from the through hole, and the busbar holder may include a support that supports the busbar from below, the support being between the fixing member and the through hole.

The fixing portion may include a first fixing portion protruding upwardly from the busbar holder and extended along the through hole in the first direction, and a second fixing portion protruding upwardly from the busbar holder and extending in the first direction to face the first fixing portion with the through hole between the first and second fixing portions, wherein the first fixing portion and the second fixing portion include a plurality of insertion grooves, and wherein the fixing member is configured to be inserted into an insertion groove of the first fixing portion and an insertion groove of the second fixing portion.

The fixing member may include a main body that surrounds a bent portion of the busbar and protrusions protruding from both ends of the main body, and wherein the protrusions of the fixing member are configured to be inserted into the insertion groove.

The first fixing portion and the second fixing portion may be spaced apart from each other at a distance substantially equal to a length of the main body of the fixing member.

The length of the main body of the fixing member may be substantially equal to or greater than the length of the busbar.

The protrusions of the fixing member may include surfaces inclined in a direction of the main body.

The protrusions of the fixing member may have shapes substantially symmetrical to each other.

The separating member may include a main body and protrusions protruding from both ends of the main body, wherein the protrusions of the separating member are configured to be inserted into the insertion grooves.

The protrusions of the separating member and the protrusions of the fixing member may have substantially the same shape.

The main body of the separating member and the main body of the fixing member may have substantially the same length.

The main body of the separating member and the main body of the fixing member may have substantially the same width.

The insertion groove of the busbar holder may include a latching portion protruding from a side surface of the insertion groove.

The latching portion may be configured to contact the protrusions of the fixing member.

The insertion groove may be in the fixing portion of the busbar holder at a substantially constant interval in the first direction.

The first and second flat surfaces of the busbar may be welded to the electrode terminal.

The fixing member and the separating member may include an insulating material.

The fixing member and the separating member may be formed by insert injection molding.

According to embodiments of the present disclosure, various connection structures of battery cells may be implemented by mounting various busbars into a busbar holder.

According to embodiments of the present disclosure, a busbar assembly process may be modularized and simplified.

According to embodiments of the present disclosure, a latching portion may be in an insertion groove of a busbar holder so that a separate fixing member may not be necessary for assembling a busbar into a busbar holder to thereby easily fix the busbar.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 is a perspective view illustrating a battery cell according to embodiments of the present disclosure;
FIG. 2 is a perspective view illustrating a battery structure according to embodiments of the present disclosure;
FIG. 3 is a perspective view illustrating a busbar and a busbar holder according to embodiments of the present disclosure;
FIG. 4 is a perspective view illustrating a busbar in which a fixing member is omitted according to embodiments of the present disclosure;
FIG. 5 is a plan view illustrating a busbar including a fixing member according to embodiments of the present disclosure;
FIG. 6 is a perspective view illustrating a separating member according to embodiments of the present disclosure;
FIG. 7 is a perspective view illustrating a busbar holder according to embodiments of the present disclosure;
FIG. 8 is a perspective view illustrating a busbar and a separating member according to an embodiment of the present disclosure;
FIG. 9 is a perspective view illustrating a busbar and a separating member according to another embodiment of the present disclosure;
FIG. 10 is an enlarged perspective view illustrating portion A of FIG. 7; and
FIG. 11 is a cross-sectional view illustrating an insertion groove of FIG. 10 taken along direction D2.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

According to embodiments of the present disclosure, the sizes of layers and areas illustrated in the drawings may be exaggerated for clarity of explanation. The sizes in the drawings are only for ease of explanation, but the present disclosure is not limited thereto. Like reference numerals in the drawings denote like elements throughout the specification.

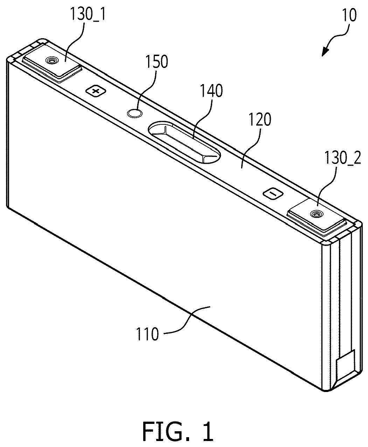

FIG. 1 is a perspective view illustrating a battery cell 10 according to the embodiments of the present disclosure.

The battery cell 10 may include at least one or more electrode assemblies comprising a positive electrode, a negative electrode, and a separator made of an insulating material between the positive electrode and the negative electrode, a case 110 accommodating an electrode assembly, and a cap plate 120 coupled to an open end of the case 110. The positive electrode, the negative electrode, and the separator may be wound or stacked. The battery cell 10 in FIG. 1 may be a prismatic secondary battery. However, the battery cell 10 of the present disclosure is not limited thereto, and the battery cell 10 any other suitable type of secondary battery.

Each of the positive electrode and the negative electrode may include a current collector made of a thin metal foil having a coated portion on which an active material is coated and an uncoated portion on which an active material is not coated. The positive electrode and the negative electrode are wound after interposing the separator, which is an insulator, therebetween. However, the present disclosure is not limited thereto, and the electrode assembly may have a structure in which a positive electrode and a negative electrode, each made of a plurality of sheets, are alternately stacked with a separator interposed therebetween.

A positive electrode for a rechargeable lithium battery may include a current collector and a positive electrode active material layer on the current collector. The positive electrode active material layer may include a positive electrode active material and may further include a binder and/or a conductive material(e.g., an electrically conductive material).

The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The negative electrode for a rechargeable lithium battery may include a current collector and a negative electrode active material layer on the current collector. The negative electrode active material layer may include a negative electrode active material, and may further include a binder and/or a conductive material (e.g., an electrically conductive material).

A positive tab may be connected to one end of a positive electrode substrate, and a negative tab may be connected to one end of a negative electrode substrate in the electrode assembly. The positive tab and the negative tab may be electrically connected to a positive electrode terminal 130_1 and a negative electrode terminal 130_2, respectively, on the cap plate. The positive electrode terminal 130_1 and the negative electrode terminal 130_2 formed on the cap plate may be electrically connected to a busbar.

The case 110 may form the overall outer appearance of the battery cell 10 and may be made of a conductive metal, such as aluminum, aluminum alloy, or nickel-plated steel. In addition, the case 110 may provide a space in which the electrode assembly is accommodated.

According to embodiments of the present disclosure, the case 110 may be a prismatic case, and the battery cell 10 may be a prismatic battery cell. However, the scope of the present disclosure is not limited thereto, but the battery cell 10 may have any shape, such as a prismatic shape, a cylindrical shape, a pouch shape, etc.

The cap plate 120 may be coupled to an open end of the case 110 to seal the case 110. The case 110 and the cap plate 120 may be made of a conductive material. According to embodiments of the present disclosure, the upper end of the case 110 may be open, and the cap plate 120 may seal the upper end of the case 110, which is open.

The positive electrode terminal 130_1 electrically connected to the positive electrode and the negative electrode terminal 130_1 electrically connected to the negative electrode may be coupled to the cap plate 120. For example, the positive electrode terminal 130_1 and the negative electrode terminal 130_2 may penetrate the cap plate 120 and protrude outward.

A vent portion 140 may be on at least one surface of the battery cell 10. In one or more embodiments, the vent portion 140 may be on the upper surface of the battery cell 10, i.e. the cap plate 120. The vent portion 140 may be configured to open in response to an internal pressure greater than or equal to a predetermined threshold pressure being generated in the battery cell 10.

The cap plate 120 may include an electrolyte inlet 150. For example, the electrolyte inlet 150 may be a hole formed in the cap plate 120. After the cap plate 120 is coupled to the opening of the case 100 and sealed, the electrolyte inlet 150 for injecting an electrolyte to the inside of the case 110 may be formed. The electrolyte inlet 150 may be sealed by a sealing member after the electrolyte is injected.

The battery cell 10 may be a lithium battery cell, a sodium battery cell, etc. However, the scope of the present disclosure is not limited thereto, and the battery cell 10 may be any type of battery that repeatedly provides electricity by charging and discharging. According to embodiments in which the battery cell 10 is a lithium battery cell, the battery cell may be used in an electric vehicle (EV) due to the life characteristics and the high-rate characteristic of a lithium battery cell. In addition, the battery cell may be used in a hybrid vehicle such as a Plug-in Hybrid Electric Vehicle (PHEV), etc. The lithium battery cell may be used in fields that require a large amount of power storage such as electric bicycles, power tools, etc.

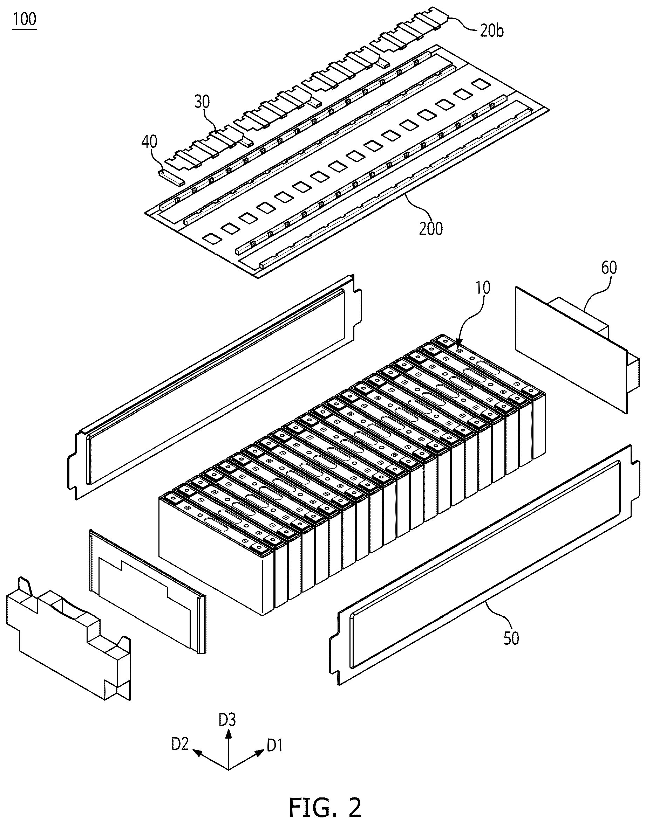

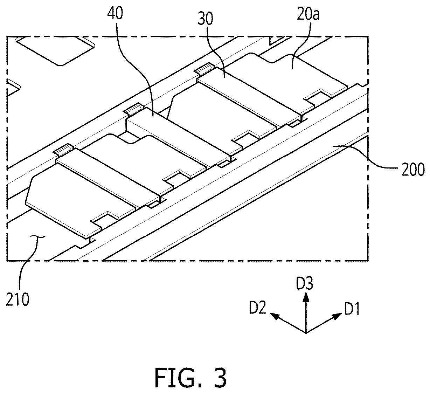

FIG. 2 is a perspective view illustrating a battery structure according to embodiments of the present disclosure. FIG. 3 is a perspective view illustrating a busbar and a busbar holder according to embodiments of the present disclosure.

A first direction may be defined by a direction D1 of a coordinate system, a second direction may be defined by a direction D2 of the coordinate system, and a third direction may be defined by a direction D3 of the coordinate system.

Referring to FIG. 2 and FIG. 3, a battery structure 100 according to embodiments of the present disclosure may include a cell stack including a plurality of battery cells 10, a separating member 40, busbars 20a and 20b, and a busbar holder 200. The number of battery cells 10 in FIG. 2 is not limited in the present disclosure. Any number of battery cells may form a cell stack, and the cell stack may be included in the battery structure 100. The arrangement of the battery cell 10 is not limited to the structure illustrated in FIG. 2, and may be modified as needed.

The battery structure 100 may include a cell stack (e.g., a stack of the battery cells 10 extending in the first direction D1). The cell stack may include the plurality of battery cells 10, which are stacked in one direction. According to embodiments, the plurality of battery cells 10 may be arranged in one direction so that the wide surfaces thereof may face each other.

The battery module may include a battery structure 100, a pair of side plates 50, and a pair of end plates 60. The cell stack may be accommodated by the side plates 50 and the end plates 60. According to embodiments, the pair of side plates 50 may be arranged on both sides of the cell stack and the pair of end plates 60 may be substantially orthogonally coupled to the side plates 50 and supporting outermost surfaces of the battery cells 10 along an arrangement direction (direction D1) of the battery cells 10. The battery module may also include an end insulation cover between the cell stack and the end plates 60, and a top plate on the upper portion of the cell stack. A lower plate may be on the lower portion of the cell stack to support the cell stack from below.

The busbar holder 200 may support the plurality of busbars 20a and 20b. The busbars 20a and 20b may be electrically connected to the plurality of battery cells 10. The busbars 20a and 20b may be electrically connected to a circuit board equipped with various circuits and components.

The busbar holder 200 may be on the top of the plurality of battery cells according to the arrangement shown in FIG. 2, and the busbar holder 200 may support the busbars 20a and 20b. The busbar holder 200 may be on the top of a top plate. In one or more embodiments, the busbar holder 200 may be a roughly rectangular-shaped plate made of an insulating material.

The busbar holder 200 may include a through hole 210 that extends lengthwise in the direction (direction D1) of the arrangement of the battery cells 10. When the busbar holder 200 is coupled, the through hole 210 of the busbar holder 200 may expose a positive electrode terminal and a negative electrode terminal of each of the battery cells 10. The exposed positive electrode terminal and negative electrode terminal may be electrically connected to the busbar 20a and 20b.

The busbars 20a and 20b may electrically connect the positive electrode terminal to the negative electrode terminal. The busbars 20a and 20b may connect the plurality of battery cells 10 in series and/or in parallel. The busbars 20a and 20b may each include a plurality of busbars. According to embodiments, the positive electrode terminals and the negative electrode terminals of the battery cells 10 may be arranged alternately to cross each other such that the battery cells 10 may be connected in series. The busbars 20a and 20b may electrically connect the positive electrode terminal of the battery cell 10 to the negative electrode terminal of another battery cell 10. The positive electrode terminals and the negative electrode terminals of the battery cells 10 may be arranged in parallel to each other such that the battery cells 10 may be connected in parallel. The busbar 20a and 20b may also electrically connect the negative electrode terminal of the battery cell 10 to the negative electrode terminal of another battery cell 10.

For example in an embodiment in which the positive electrode terminals and the negative electrode terminals of the battery cells 10 are arranged in parallel to each other, the busbar 20b in FIG. 2 may connect four (4) of the same electrode terminals (e.g., positive or negative) of the battery cells 10, and the busbar 20a in FIG. 3 may connect two (2) of the same electrode terminals (e.g., negative or positive) of the battery cells 10. The connection structure of the battery cells 10 is not limited to the embodiments of the present disclosure and it may be modified according to the arrangement of the battery cells 10.

Flat surfaces of the busbars 20a and 20b may be connected to a positive electrode terminal and/or a negative electrode terminal by welding, for example. The area other than the positive electrode terminal and the negative electrode terminal in the battery cell 10 may be insulated from the busbars 20a and 20b by the busbar holder 200. A circuit board may be between the busbar and an upper cover, and the busbar may be electrically connected to the circuit board.

The fixing member 30 may be fixed between the flat surfaces of the busbars 20a and 20b and may be coupled to the busbar holder 200. The fixing member 30 may be coupled to the busbar holder 200 to fix the busbars 20a and 20b to the busbar holder 200.

A separating member 40 may be between the busbars 20a and 20b coupled to the busbar holder 200 to separate the busbars 20a and 20b. The separating member 40 may contact the side surfaces of the busbars 20a and 20b. The separating member 40 may be coupled and fixed to the busbar holder 200.

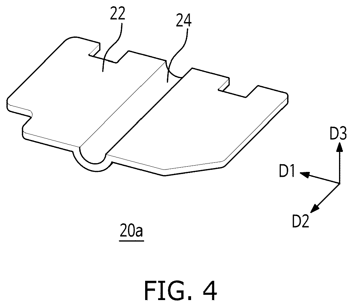

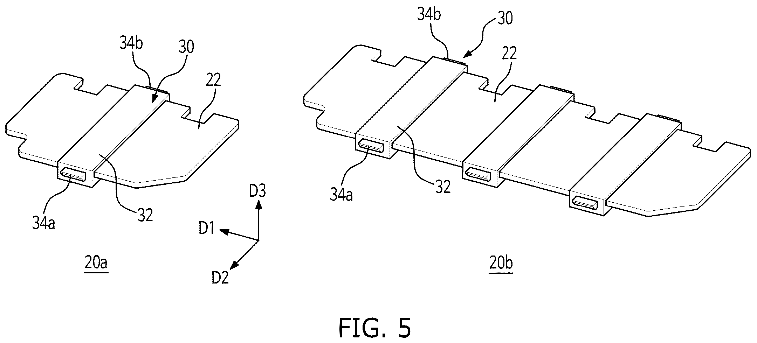

FIG. 4 is a perspective view illustrating a busbar 20a, 20b without a fixing member 30 according to embodiments of the present disclosure, and FIG. 5 is a perspective view illustrating an example of a busbar 20a, 20b to which a fixing member 30 is coupled according to embodiments of the present disclosure.

Referring to FIG. 4, the busbars 20a and 20b may include a bent portion 24 (e.g., a curved portion) between flat surfaces 22 of the busbars. In FIG. 2, two (2) of flat surfaces 22 are illustrated, but the present disclosure is not limited thereto. The busbars 20a and 20b may include three or more flat surfaces 22 and the bent (curved) portion 24 between the flat surfaces.

The flat surface 22 of the busbar 20a and 20b may be electrically connected to the electrode terminals 130_1 and 130_2 of the plurality of battery cells 10. The flat surfaces 22 of the busbars 20a and 20b may be connected to the electrode terminals 130_1 and 130_2 by welding. The busbars 20a and 20b may be made of a metal material, such as aluminum or copper, to electrically connect the plurality of battery cells 10.

The shape of the flat surface 22 of the busbars 20a and 20b may have the shape illustrated in FIG. 4 (e.g., a prismatic shape). However, the scope of the present disclosure is not limited thereto, but the shape of the flat surface 22 of the busbars 20a and 20b may have any suitable shape, such as a rectangle shape, a semicircle shape, or a trapezoid shape.

The length of the bent portion 24 of the busbars 20a and 20b may be the same (or substantially the same) as the length of the flat surface 22 of the busbars 20a and 20b, and the bent portion 24 of the busbars 20a and 20b may protrude downwardly lower than the upper surface of the flat surface 22 of the busbars 20a and 20b. However, the size of the bent portion 24 of the busbar is not limited to the embodiment of the present disclosure.

Referring to FIG. 5, the fixing member 30 may include a main body 32 that surrounds the bent portion 24 of the busbars 20a and 20b, and a first protrusion 34a and a second protrusion 34b protruding from the respective ends (e.g., opposite ends) of the main body 32. The fixing member 30 may be fixed to the bent portion 24 of the busbars 20a and 20b. The fixing member 30 may be formed by insert injection molding and made of an insulating material.

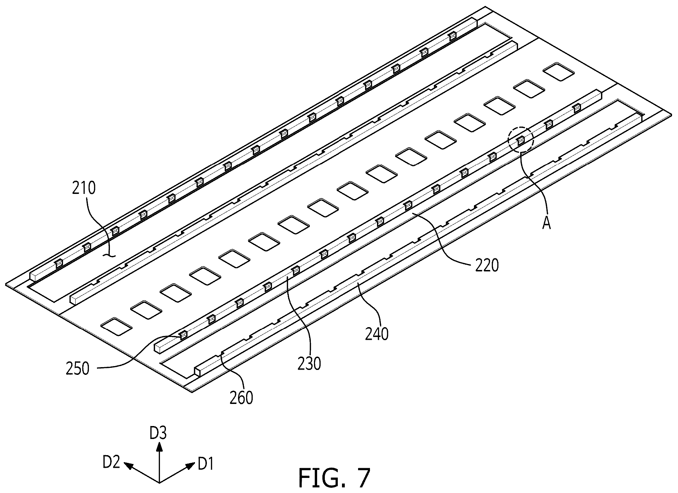

According to embodiments, the first protrusion and the second protrusion 34a and 34b of the fixing member 30 may have shapes symmetrical (or substantially symmetrical) to each other. The first protrusion and the second protrusion 34a and 34b of the fixing member 30 may be at positions symmetrical (or substantially symmetrical) to each other. The first protrusion 34a and the second protrusion 34b of the fixing member 30 may be inserted into insertion grooves (250 and 260, referring to FIG. 7) of a first fixing portion 230 and a second fixing portion 240, respectively.

According to embodiments, based on a direction D2, the length of the main body 32 of the fixing member 30 may be greater than or equal to the length of the bent portion 24 of the busbars 20a and 20b. Based on the direction D2, the length of the main body 32 of the fixing member 30 may be greater than or equal to (or substantially equal to) the length of the flat surface 22 of the busbars 20a and 20b.

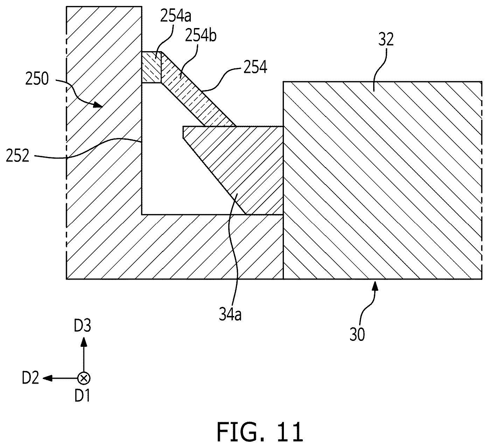

According to embodiments, the first protrusion and the second protrusion 34a and 34b of the fixing member 30 may include upper and lower surfaces perpendicular (or substantially perpendicular) to the end portion of the main body 32. In the D2 direction the length of the upper surface of the first protrusion 34a and the second protrusion 34a may be greater than the length of the lower surface of the first protrusion 34a and the second protrusion 34b (refer to FIG. 11). Accordingly, the first protrusion and the second protrusion may include surfaces that are inclined (e.g., tapered or sloped) in the direction of the main body 32 (direction D2). Accordingly, when the busbars 20a and 20b are assembled to the busbar holder 200, the first protrusion and the second protrusion 34a and 34b of the fixing member 30 may be easily inserted into the insertion grooves 250 and 260 of the first fixing portion and the second fixing portion 230 and 240, respectively.

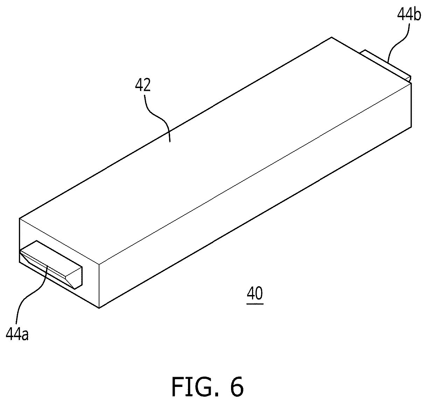

FIG. 6 is a perspective view illustrating a separating member 40 according to embodiments of the present disclosure.

The separating member 40 according to embodiments may include a main body 42, and a first protrusion 44a and a second protrusion 44b protruding from respective ends (e.g., opposite ends) of the main body 42. The separating member 40 may be formed by insert injection molding and it may include an insulating material.

According to embodiments, the first protrusion 44a and the second protrusion 44b of the separating member 40 may inserted into the insertion grooves 250 and 260, respectively, of the first fixing portion 230 and the second fixing portion 240. The first protrusion 44a and the second protrusion 44b of the separating member 40 may have the same shape (or substantially the same shape) as the first protrusion 34a and the second protrusion 34b of the fixing member 30. The first protrusion 44a and the second protrusion 44b of the separating member 40 may have the same size (or substantially the same size) as the first protrusion 34a and the second protrusion 34b of the fixing member 30.

According to embodiments, the main body 42 of the separating member 40 and the main body 32 of the fixing member 30 may have the same length (or substantially the same length). The main body 42 of the separating member 40 and the main body 32 of the fixing member 30 may have the same width (or substantially the same width). The main body 42 of the separating member 40 and the main body 32 of the fixing member 30 may have the same height (or substantially the same height). Accordingly, the separating member 40 and the fixing member 30 may be inserted between the plurality of busbars 20a and 20b to contact the busbars 20a and 20b to prevent (or at least mitigate) movement in the direction D1, and electrically separate the plurality of busbars 20a and 20b to prevent (or at least mitigate) short circuits.

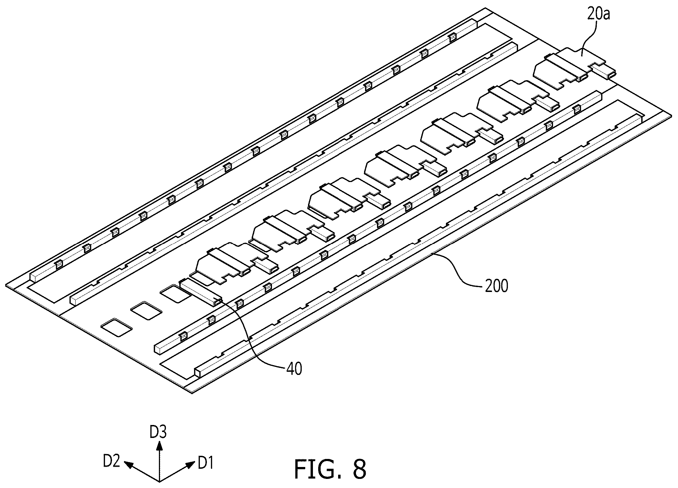

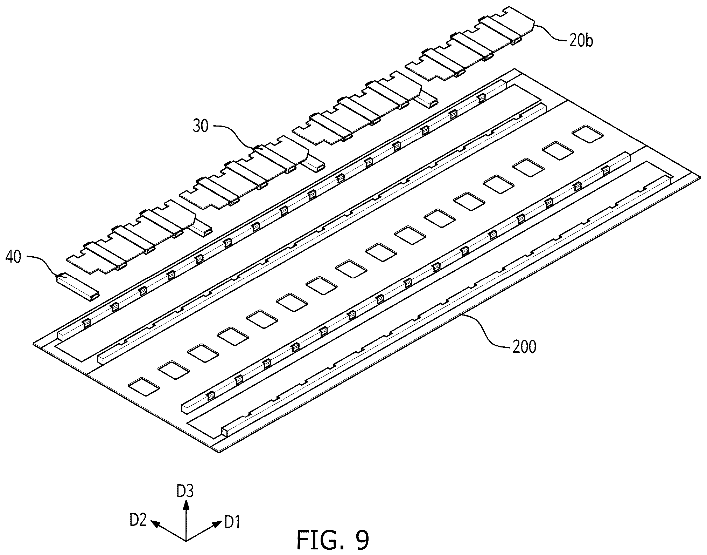

FIG. 7 is a perspective view illustrating a busbar holder 200 according to embodiments of the present disclosure, FIG. 8 is a perspective view illustrating a busbar and a separating member according to an embodiment of the present disclosure, and FIG. 9 is a perspective view illustrating a busbar and a separating member according to another of the present disclosure.

The busbar holder 200 may include the first fixing portion 230 and the second fixing portion 240 protruding upwardly from the busbar holder (direction D3) and extending along a length of the through hole 210 in the first direction (direction D1). The busbar holder 200 may include an insulating material configured to prevent (or at least mitigate) short circuits of electricity flowing through the busbars 20a and 20b. For example, the insulating material may include one or more plastics, etc.

According to embodiments, the positive electrode terminal and/or the negative electrode terminal of the battery cell 10 may be positioned in the through hole 210 of the busbar holder 200. The length of the through hole 210 in the direction D1 may be greater than or equal to (or substantially equal to) the length of the first fixing portion 230 and the second fixing portion 240 in the direction D1. The length of the through hole 210, the first fixing portion 230, and the second fixing portion 240 in the direction D1 may be greater than or equal to (or substantially equal to) the length of the busbar holder 200 in the direction D1.

According to embodiments, the first fixing portion 230 and the second fixing portion 240 may protrude upwardly from the busbar holder 200 (direction D3) and extend along the through hole 210 in the first direction (direction D1). The first and second fixing portions 230 and 240 may protrude upwardly from the busbar holder 200 and extend to face each other with the through hole 210 positioned therebetween in the second direction (direction D2).

Referring to FIG. 7, the first fixing portion 230 and the second fixing portion 240 may be positioned to be spaced apart from each other at the distance corresponding to the length of the main body 32 of the fixing member 30 and the main body 42 of the separating member 4o. Therefore, the busbars 20a and 20b may be prevented from moving in the direction D2 by fixing the main body 32 of the fixing member 30.

According to embodiments, the first fixing portion 230 and the second fixing portion 240 may be adjacent to the through hole 210 or spaced apart from the through hole 210 in the second direction D2. Referring to FIG. 7, the first fixing portion 230 may be spaced apart from the through hole 210, and the second fixing portion 240 may be adjacent to the through hole 210 (e.g., not spaced apart from the through hole 210). In some embodiments, the first fixing portion 230 may be adjacent to the through hole 210 (e.g., not spaced apart from the through hole 210), and the second fixing portion 240 may be spaced apart from the through hole 210. The first fixing portion 230 and the second fixing portion 240 may both be spaced apart from the through hole 210 in the second direction D2.

According to embodiments, in the D2 direction the length of the through hole 210 may be smaller than the length of the main bodies 32 and 42 of the fixing member 30 and the separating member 40. Accordingly, the busbar holder 200 may include a support member 220 that supports the busbars 20a and 20b from below between the first fixing portion 230 and/or the second fixing portion 240 and the through hole 210.

According to embodiments, the first fixing portion 230 and the second fixing portion 240 may include the insertion grooves 250 and 260. The fixing member 30 and the separating member 40 may be inserted into the insertion grooves 250 and 260 of the first fixing portion 230 and the second fixing portion 240. According to embodiments, the protrusions 34a and 34b of the fixing member 30 and the protrusions 44a and 44b of the separating member 40 may be inserted into the insertion grooves 250 and 260. In the D2 direction the length of the insertion grooves 250 and 260 may be equal to (or substantially equal to) or greater than the length of the protrusions 34a and 34b of the fixing member 30 and the protrusions 44a and 44b of the separating member 40. Accordingly, the first fixing portion 230 and the second fixing portion 240 may be coupled to the fixing member 30 and the separating member 40.

According to embodiments, the first fixing portion 230 and the second fixing portion 240 may include a plurality of each of the insertion grooves 250 and 260. The insertion groove 260 of the second fixing portion 240 may be located in a position corresponding to position of the insertion groove 250 of the first fixing portion 230 such that the insertion grooves 250 and 260 face each other in the first direction (direction D1). The first protrusions 34a and 44a of the fixing member 30 and/or the separating member 40 may be inserted into the insertion groove 250 of the first fixing portion 230, and the second protrusions 34b and 44b of the fixing member 30 and/or the separating member 40 may be inserted into the insertion groove 260 of the second fixing portion 240.

According to embodiments, the insertion grooves 250 and 260 may be located at a constant distance (e.g., a regular or substantially regular intervals) in the first direction (direction D1) in the first fixing portion and the second fixing portion 230 and 240 of the busbar holder 200. For example, the insertion grooves 250 and 260 may be located at a constant distance (or substantially constant distance), which is the sum of 1/2 of the width of the busbar 20a and 1/2 of the width of the separating member 40. The constant distance (or substantially constant distance) of the insertion grooves 250 and 260 may be defined as the distance from the center of one of the insertion grooves 250 and 260 to the center of another one of the insertion grooves 250 and 260. The constant distances (or substantially constant distances) between the insertion grooves 250 and 260 may be determined based on the sizes of the busbars 20a and 20b and the separating member 40.

In one or more embodiments, various busbars 20a and 20b may be mounted on a single busbar holder 200, which implements various connection structures of the battery cells 10. For example, referring to FIG. 8, each of the busbars 20a may be mounted on the busbar holder 200 to connect two (2) of electrode terminals of the battery cells 10. Referring to FIG. 9, each of the busbars 20b may be mounted on the busbar holder 200 to connect four (4) of electrode terminals of the battery cells 10.

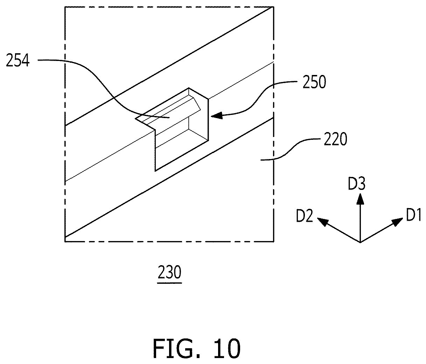

FIG. 10 is an enlarged perspective view illustrating portion A of FIG. 7, and FIG. 11 is a cross-sectional view illustrating the insertion groove 250 of FIG. 10 taken along the direction D2.

Referring to FIG. 10 and FIG. 11, the insertion grooves 250 and 260 of the busbar holder 200 may include a latching portion 254 protruding from a side surface 252 of the insertion grooves 250 and 260.

According to embodiments, the length of the insertion grooves 250 and 260 in the D2 direction may be greater than the length of the protrusions 34a and 34b of the fixing member 30 in the D2 direction. Therefore, the protrusions 34a and 34b of the fixing member 30 may be inserted into the insertion grooves 250 and 260 to allow the fixing member 30 to be coupled to the busbar holder 200.

According to embodiments, the insertion grooves 250 and 260 may be spaced from the support unit 220 and extend to the top of the first fixing portion 230 and the second fixing portion 240. The height at which the insertion grooves 250 and 260 are spaced from the support unit 220 may be greater than or equal to (or substantially equal to) the length from the bottom of the main body 32 of the fixing member 30 to the bottom of the protrusion 34a of the fixing member 30.

The latching portion 254 may include a first extension 254a parallel (or substantially parallel) to the direction D2 and a second extension 254b extending outward and downward from the first extension 254a. According to embodiments, the top of the first extension 254a of the latching portion 254 may be higher than the top of the main body 32 of the fixing member 30. The bottom of the second extension 254b of the latching portion 254 may be equal to (or substantially equal to) or higher than the top of the protrusion 34a of the fixing member 30.

According to embodiments, the bottom of the second extension 254b of the latching portion 254 may have the same height (or substantially the same height) as the top of the protrusion 34a of the fixing member 30. Accordingly, the latching portion 254 may contact the protrusions 34a and 34b of the fixing member 30 and the protrusions 44a and 44b of the separating member 40. Accordingly, the protrusions 34a and 34b of the fixing member 30 may be fixed to prevent (or at least mitigate) the busbars 20a and 20b from moving along the direction D3 (e.g., upward).

According to embodiments, the length of the latching portion 254 in the direction D2 may be smaller than the length of the insertion groove 250 in the direction D2.

According to embodiments, the second extension 254b of the latching portion 254 may be inclined (sloped upward) in the D2 direction. The inclination of the second extension 254b may be equal to (or substantially equal to) or smaller than that of the inclined surface of the protrusion 34a. The second extension 254b of the latching portion 254 may be configured to move (or deform) elastically. Therefore, the protrusion 34a of the fixing member 30 may be easily mounted in the insertion grooves 250 and 260. However, the shape of the latching portion 254 in the present disclosure is not limited to the embodiment illustrated in FIG. 10 and FIG. 11.

Although the present disclosure has been described above with respect to embodiments thereof, the present disclosure is not limited thereto. Various modifications and variations can be made thereto by those skilled in the art within the scope of the appended claims.

## Claims

1. A battery structure, comprising:
a plurality of battery cells (10) arranged in a first direction (D1), each of the plurality of battery cells (10) comprising an electrode terminal (130_1, 130_2);
a busbar holder (200) on a top of the plurality of battery cells (10), the busbar holder (200) comprising a through hole (210);
a plurality of busbars (20a, 20b), each busbar of the plurality of busbars (20a, 20b) comprising a first flat surface (22) and a second flat surface (22) each electrically connected to one of the plurality of battery cells (10);
a plurality of fixing members (30) coupled to the busbar holder (200), each fixing member of the plurality of fixing members (30) being fixed between the first flat surface (22) and the second flat surface (22) of one of the plurality of busbars (20a, 20b); and
a plurality of separating members (40) coupled to the busbar holder (200) and separating adjacent busbars of the plurality of busbars (20a, 20b).

2. The battery structure as claimed in claim 1, wherein each busbar (20a, 20b) comprises a bent portion (24) between the first flat surface (22) and the second flat surface (22), and
wherein each fixing member (30) is fixed to the bent portion (24) of one of the plurality of busbars (20a, 20b).

3. The battery structure as claimed in claim 1 or claim 2, wherein the busbar holder (200) comprises a fixing portion (230, 240) protruding upwardly from the busbar holder (200) and extending along the through hole (210) in the first direction (D1), and
wherein the fixing portion (230, 240) comprises an insertion groove (250, 260) into which each fixing member (30) is configured to be inserted.

4. The battery structure as claimed in claim 3, wherein the fixing portion (230, 240) is spaced apart from the through hole (210), and
wherein the busbar holder (200) comprises a support (220) configured to support the plurality of busbars (20a, 20b) from below, the support (220) being between the fixing portion (230, 240) and the through hole (210).

5. The battery structure as claimed in claim 3 or claim 4, wherein the fixing portion (230, 240) comprises:
a first fixing portion (230) protruding upwardly from the busbar holder (200) and extending along the through hole (210) in the first direction (D1); and
a second fixing portion (240) protruding upwardly from the busbar holder (200) and extending in the first direction (D1), the second fixing portion (240) facing the first fixing portion (230) and the through hole (210) being between the first fixing portion (230) and the second fixing portion (240),
wherein each of the first fixing portion (230) and the second fixing portion (240) comprise a plurality of insertion grooves (250, 260), and
wherein each fixing member (30) is configured to be inserted into an insertion groove (250) of the plurality of insertion grooves of the first fixing portion (230) and an insertion groove (260) of the plurality of insertion grooves of the second fixing portion (240).

6. The battery structure as claimed in claim 5, wherein each fixing member (30) comprises a main body (32) that surrounds a bent portion (24) of each busbar (20a, 20b) and protrusions (34a, 34b) protruding from both ends of the main body (32), and
wherein the protrusions (34a, 34b) of each fixing member (30) are configured to be inserted into the insertion groove of the plurality of insertion grooves (250) of the first fixing portion (230) and the insertion groove of the plurality of insertion grooves (260) of the second fixing portion (240).

7. The battery structure as claimed in claim 6, wherein the first fixing portion (230) and the second fixing portion (240) are spaced apart from each other at a distance substantially equal to a length of the main body (32) of each fixing member (30).

8. The battery structure as claimed in claim 7, wherein the length of the main body (32) of each fixing member (30) is substantially equal to or greater than the length of each busbar (20a, 20b).

9. The battery structure as claimed in any one of claims 6 to 8, wherein the protrusions (34a, 34b) of each fixing member (30) comprise surfaces inclined in a direction of the main body (32).

10. The battery structure as claimed in any one of claims 6 to 9, wherein the protrusions (34a, 34b) of each fixing member (30) have shapes substantially symmetrical to each other.

11. The battery structure as claimed in any one of claims 6 to 10, wherein each separating member of the plurality of separating members (40) comprises a main body (42) and protrusions (44a, 44b) protruding from both ends of the main body (42), and
wherein the protrusions (44a, 44b) of each separating member (40) are configured to be inserted into the plurality of insertion grooves (250, 260).

12. The battery structure as claimed in claim 11, wherein the protrusions (44a, 44b) of the separating member (40) and the protrusions (34a, 34b) of the fixing member (30) have a same shape.

13. The battery structure as claimed in claim 12, wherein the main body (42) of the separating member (40) and the main body (32) of the fixing member (30) have a same length.

14. The battery structure as claimed in claim 12 or claim 13, wherein the main body (42) of the separating member (40) and the main body (32) of the fixing member (30) have a same width.

15. The battery structure as claimed in any one of claims 6 to 14, wherein each insertion groove of the plurality of insertion grooves (250, 260) of the busbar holder (200) comprises a latching portion (254) protruding from a side surface (252) of each insertion groove.
